# EUROPÄISCHE PATENTSCHRIFT

(11) **EP 0 967 421 B1**
(45) Veröffentlichungstag und Bekanntmachung des Hinweises auf die Patenterteilung: **19.11.2003**
(21) Anmeldenummer: 99106296.9
(22) Anmeldetag: 16.04.1999
(51) Int. Cl.: F16J 15/08

(54) **Flachdichtung**
Flat gasket
Joint plat

(30) Priorität: 25.06.1998 DE 29811346 U
(43) Veröffentlichungstag der Anmeldung: 29.12.1999
(73) Patentinhaber: ElringKlinger AG, 72581 Dettingen (DE)
(72) Erfinder: Baron, Ralf, 72555 Metzingen (DE); Kullen, Wilhelm, 72584 Hülben (DE); Wondraschek, Wolfgang, 71229 Leonberg (DE)
(74) Vertreter: Haecker, Walter, Dipl.-Phys.

(56) Entgegenhaltungen:
- US-A- 5 544 902
- US-A- 5 673 920

## Beschreibung

Die Erfindung betrifft eine Flachdichtung mit einer Dichtungsplatte, welche wenigstens ein Loch für den Durchtritt eines Gewindeschafts, insbesondere des Gewindeschafts einer Schraube, aufweist und im Bereich dieses Lochs von einer Blechlage mit verhältnismäßig geringer Blechstärke gebildet wird.

Vor allem bei Verbrennungsmotoren werden immer häufiger z. B. als Auspuffkrümmerdichtungen und Zylinderkopfdichtungen Flachdichtungen verwendet, deren Dichtungsplatte im wesentlichen aus einer oder mehreren Blechlagen besteht, die gegebenenfalls vollständig oder partiell mit einer z. B. elastomeren Masse beschichtet ist bzw. sind, wobei bei mehrlagigen Dichtungsplatten eine Blechlage eine Trägerplatte bilden kann, welche ein- oder beidseitig mit einer von einer weiteren Blechlage gebildeten und mit der Trägerplatte nicht deckungsgleichen Auflage versehen ist, so daß ein Schraubenloch nur in einer dieser Blechlagen gebildet sein kann (US-A-5 544 902).

Der Montage solcher Flachdichtungen dienen Schrauben oder Gewindebolzen, welche durch die Schraubenlöcher der Dichtungen hindurchgeschoben werden, wobei während der Montage oder beim Verbringen der Dichtungen an den Montageort die Dichtungen an den Schrauben hängen können (in diesem Fall verläuft die Dichtungsplattenebene zumindest ungefähr vertikal); vor allem dann besteht bei einer Blechlage mit einer entsprechend geringen Blechstärke die Gefahr, daß der an ein Schraubenloch angrenzende Randbereich dieser Blechlage in einen Gewindegang der Schraube bzw. des Gewindebolzens hineinrutscht und infolgedessen die Schraube bzw. der Gewindebolzen nicht mehr zentrisch im kreisrunden Schraubenloch liegt. Wenn die Dichtung vermittels der Schrauben bzw. Gewindebolzen am Motor richtig und genau positioniert werden soll, hat ein solches Eingreifen der Blechlage in einen Gewindegang zur Folge, daß die Dichtung unter Umständen versehentlich nicht in der erforderlichen Position relativ zu gegeneinander abzudichtenden Motorbauteilen montiert wird, was z. B. zu Undichtigkeiten führen kann, weil moderne Motorkonstruktionen in aller Regel eine sehr exakte Positionierung von Dichtelementen, wie beispielsweise Sicken, solcher Dichtungen verlangen.

Zur Vermeidung dieses Problems bei einer Flachdichtung mit einer Dichtungsplatte, welche wenigstens ein Loch für den Durchtritt eines Gewindeschafts aufweist und im Bereich dieses Lochs von einer Blechlage gebildet wird, deren Blechstärke ein Eingreifen eines an das Loch angrenzenden Randbereichs in einen Gewindegang des Gewindeschafts ermöglichen würde, wird erfindungsgemäß vorgeschlagen, die Dichtung so auszubilden, daß zur Zentrierung des Gewindeschafts im Loch die Blechlage in ihrem an das Loch angrenzenden Randbereich mindestens ein von der Blechlage gebildetes und aus deren Ebene herausgebogenes, ein Eingreifen der Blechlage in einen Gewindegang verhinderndes Zentrierelement aufweist, welches beim Anziehen der Schraube ohne großen Kraftaufwand mindestens ungefähr in die Ebene der Blechlage zurückbiegbar ist, und zwar so, daß dabei das Zentrierelement zumindest nahezu flachgedrückt wird und nicht etwa aufgrund einer Faltenbildung oder dergleichen zu einer unerwünschten nennenswerten Verdickung der Blechlage im Bereich des besagten Lochs führen kann, wie dies dann der Fall sein könnte, wenn als Zentrierelement eine vom Lochrand abstehende Blechzunge verwendet wird, welche aus der Ebene der Blechlage so herausgebogen wurde, daß sie mit dieser Ebene einen Winkel von beispielsweise 90° bildet und gegen den Umfang des Gewindeschafts anliegt.

Wenn, wie dies häufig der Fall ist, Flachdichtungen mit ungefähr vertikal orientierter Dichtungsplatte an den besagten Schrauben oder Gewindeschäften hängend montiert werden, und zwar so, daß ein ganz bestimmter Außenrandbereich der Dichtungsplatte oben liegt, genügt pro Schraubenloch ein einziges Zentrierelement, welches so angeordnet ist, daß es sich von oben auf dem Außenumfang des Gewindeschafts abstützt; wenn diese Voraussetzungen jedoch nicht stets gegeben sein müssen, empfiehlt es sich, die Dichtung so zu gestalten, daß die Blechlage mehrere Zentrierelemente aufweist, welche insbesondere im Abstand voneinander (um das Schraubenloch herum) angeordnet sind.

Damit das Zentrierelement möglichst leicht in die Ebene der Blechlage zurückgebogen werden kann, ist es vorteilhaft, wenn es sich lediglich über den für die Schraubenzentrierung erforderlichen Umfangswinkel des Schraubenlochs erstreckt - ist die Erstreckung des Zentrierelements in Umfangsrichtung des Schraubenlochs zu gering, ist nicht für jede Gestalt des Zentrierelements gewährleistet, daß dieses nicht in einen Gewindegang eingreifen kann.

Grundsätzlich kann das Zentrierelement die unterschiedlichsten geometrischen Formen haben; vom Schraubenlochzentrum aus auf die Kante des an das Schraubenloch angrenzenden Randbereichs der Blechlage gesehen kann das Zentrierelement beispielsweise die folgenden Formen haben: Die Gestalt einer ungefähr halbkreisförmigen Sicke, eines liegenden S oder eines V oder aber auch die Gestalt eines schräggezogenen Z, wobei der mittlere Schenkel des Z ungefähr quer zur Richtung der Gewindesteigung verläuft, das Zentrierelement kann aber auch dadurch gebildet werden, daß der das Schraubenloch umgebende Randbereich der Blechlage in ungefähr radialer Richtung geschlitzt wird und sodann einer der beiden an den Schlitz angrenzenden Bereiche oder beide an den Schlitz angrenzenden Bereiche der Blechlage in Richtung der Lochachse aus der Ebene der Blechlage hochgebogen wird bzw. werden (im Falle des Hochbiegens beider Bereiche können diese in entgegengesetzten Richtungen aus der Blechlagenebene herausgebogen werden), und schließlich ist es auch denkbar, zwei in geringem Abstand voneinander angeordnete, bezüglich der Lochachse ungefähr radial verlaufende Schlitze vorzusehen und die dadurch entstehende, zwischen den beiden Schlitzen liegende Blechzunge gegenüber der Blechlagenebene zu schränken, d. h. um die Mittelachse der Zunge etwas zu kippen.

In allen Fällen ist das Zentrierelement nicht nur leicht rückformbar, sondern erlaubt es auch, und zwar auch im Falle mehrerer Zentrierelemente pro Schraubenloch, die Dichtungen auf die Gewindeschäfte einfach aufzustecken, ohne daß ein Verhaken des Lochrandes an den Gewindekämmen auftritt, was den Montagevorgang bislang erschwert hat.

Besonders bevorzugt werden Ausführungsformen, bei denen das Zentrierelement an seinen quer zum Schraubenlochrand verlaufenden Rändern mit der eigentlichen Blechlage verbunden ist und in letztere übergeht, denn mit derartigen Ausführungsformen lassen sich nicht nur Probleme mit der Verpackung von Flachdichtungen vermeiden, sondern auch jegliches Verletzungsrisiko beim Handhaben erfindungsgemäßer Dichtungen.

Bei derartigen Ausführungsformen könnte das Zentrierelement an seinem vom Schraubenloch abgewandten Rand freigestanzt sein, bevorzugt werden jedoch solche erfindungsgemäßen Dichtungen, bei denen das Zentrierelement auch an seinem vom Schraubenloch abgewandten Rand mit der eigentlichen Blechlage verbunden ist und in letztere übergeht.

Sowohl hinsichtlich der Herstellung, als auch der Funktion und der leichten Zurückbiegbarkeit des Zentrierelements ist es von Vorteil, wenn dieses die Gestalt einer aus der Blechlage herausgeprägten und dem Lochzentrum zu offenen Noppe hat.

Am leichtesten läßt sich das Zentrierelement bei der Montage der Dichtung in die Ebene der eigentlichen Blechlage zurückbiegen und mit Sicherheit ohne jegliche Faltenbildung flachdrücken, wenn der dem Schraubenlochzentrum zugekehrte Randbereich des Zentrierelements parallel zur eigentlichen Blechlage verläuft.

Weitere Merkmale, Vorteile und Einzelheiten der Erfindung ergeben sich aus der beigefügten zeichnerischen Darstellung sowie der nachfolgenden Beschreibung einer besonders bevorzugten Ausführungsform der Erfindung; in der Zeichnung zeigen:
- Fig. 1: eine Draufsicht auf eine als Auspuffkrümmerdichtung gestaltete erfindungsgemäße Flachdichtung;
- Fig. 2: den Ausschnitt Y aus Fig. 1 in größerem Maßstab;
- Fig. 3: einen Schnitt nach der Linie 3-3 in Fig. 2;
- Fig. 4: einen Schnitt nach der Linie 4-4 in Fig. 2, jedoch mit einem Teilstück eines durch das in Fig. 2 gezeigte Schraubenloch hindurchgesteckten Gewindeschafts, und
- Fig. 5: eine der Fig. 4 entsprechende Darstellung, jedoch ohne Zentrierelement, zur Verdeutlichung des mit der Erfindung zu lösenden Problems.

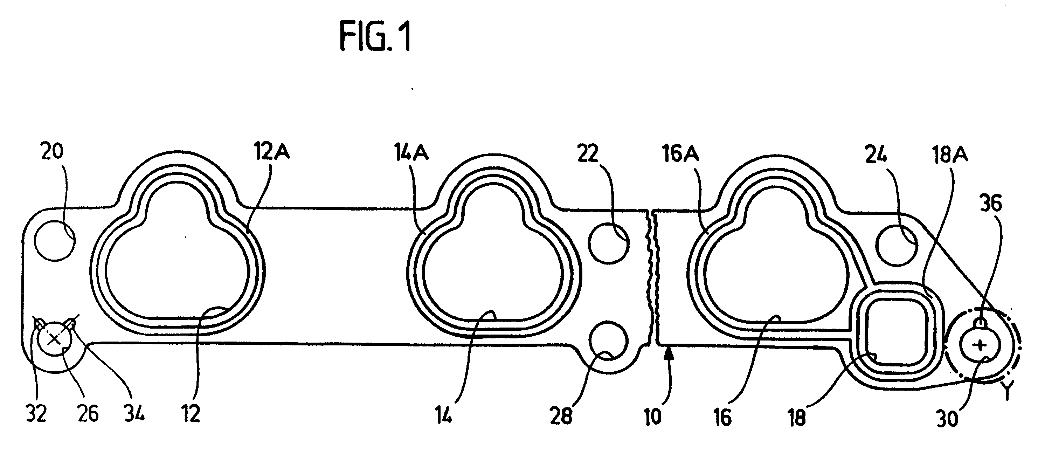

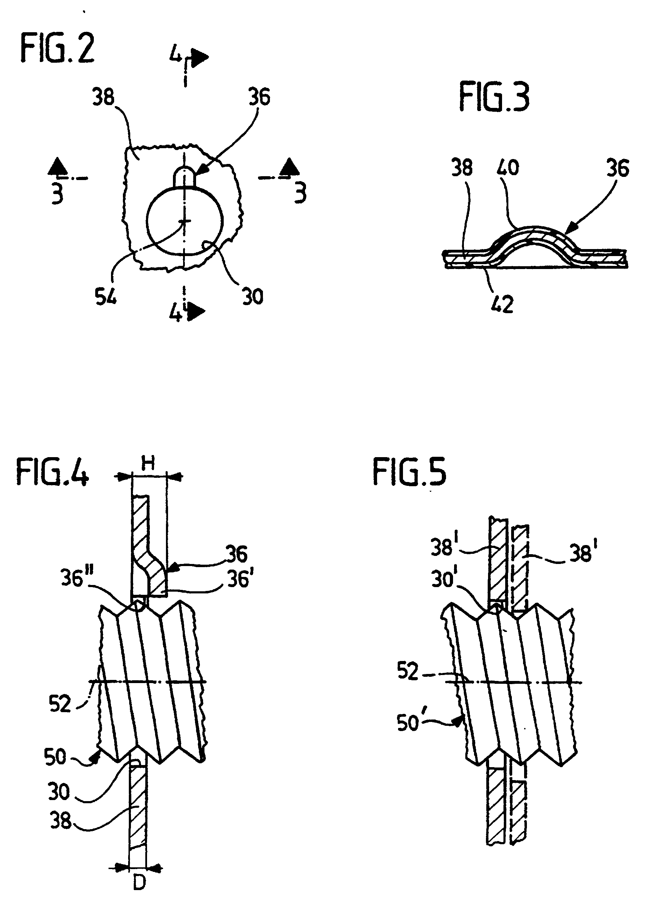

Die Fig. 1 zeigt eine als Ganzes mit 10 bezeichnete Flachdichtung mit mehreren Durchgangsöffnungen 12, 14, 16 und 18 für abzudichtende Medien und mehreren Schraubenlöchern 20, 22, 24, 26, 28 und 30, von denen die kreisrunden Schraubenlöcher 26 und 30 mit erfindungsgemäßen Zentrierelementen 32 und 34 bzw. 36 versehen sind. Wie die Fig. 3 in Verbindung mit Fig. 1 erkennen läßt, besteht die Dichtungsplatte der Flachdichtung 10 aus einer einzigen Blechlage 38, welche beidseitig vollflächig mit einem vorzugsweise elastomeren Dichtmaterial beschichtet ist, wobei die Beschichtungen in Fig. 3 mit 40 und 42 bezeichnet sind. Um die Durchgangsöffnungen 12, 14, 16 und 18 herum weist die Flachdichtung 10 Dichtelemente 12A, 14A, 16A und 18A auf, welche, wie bekannt, als im Querschnitt ungefähr kreisbogenförmige Sicken der Dichtungsplatte gestaltet sein sollen, jedoch keiner näheren Erörterung bedürfen, weil diese Dichtelemente als solche nicht Gegenstand der vorliegenden Erfindung sind.

Die beiden dem Schraubenloch 26 zugeordneten Zentrierelemente 32 und 34 weisen einen Mittenabstand von ungefähr 90° voneinander auf, und alle drei Zentrierelemente 32, 34 und 36 sind vorzugsweise gleich gestaltet, so daß es ausreicht, im folgenden nur die Gestaltung des Zentrierelements 36 zu beschreiben. Dies soll anhand der Figuren 2 bis 4 erfolgen, wobei jedoch in Fig. 4 der Einfachheit der Darstellung wegen die Beschichtungen 40 und 42 weggelassen wurden.

Zunächst soll jedoch anhand der Fig. 5 die der Erfindung zugrundeliegende Problematik erläutert werden:

Die Fig. 5 zeigt eine Blechlage 38' mit einem Schraubenloch 30' für den Durchtritt eines Gewindeschafts 50' und soll mindestens in der Nachbarschaft des Schraubenlochs 30' eben ausgebildet sein, wobei die Fig. 5 die Blechlage 38' mit ausgezogenen bzw. gestrichelten Linien in zwei bezüglich des Gewindeschafts 50' verschiedenen Positionen zeigt - in der gemäß Fig. 5 linken und mit ausgezogenen Linien gezeichneten Position liegt der Gewindeschaft 50' zentrisch im Schraubenloch 30', in der rechten, mit gestrichelten Linien dargestellten Position jedoch exzentrisch. Die in den Figuren 4 und 5 mit 52 bezeichnete Achse stellt in allen Fällen die Achse des Gewindeschafts dar und in der in Fig. 5 links dargestellten Position der Blechlage 38' gleichzeitig auch die Achse des Schraubenlochs 30'. Wenn nun die Blechstärke der Blechlage 38' so gering ist, daß der an das Schraubenloch 30' angrenzende Randbereich der Blechlage 38' in einen Gewindegang des Gewindeschafts 50' eingreifen kann, ist es also - wie in Fig. 5 rechts dargestellt - möglich, daß das Schraubenloch 30' eine bezüglich der Gewindeschaftachse 52 exzentrische Position einnimmt, und zwar insbesondere dann, wenn die Blechlage 38' am Gewindeschaft 50' hängend gehandhabt wird.

Bei der zeichnerisch dargestellten, bevorzugten Ausführungsform hat das Zentrierelement 36 die Gestalt einer extrem kurzen, bezüglich der in Fig. 2 mit 54 bezeichneten Achse des Schraubenlochs 30 ungefähr radial orientierten Sicke, welche zum Schraubenloch 30 hin offen ist und an ihren quer zum Schraubenlochrand verlaufenden Rändern sowie an ihrem vom Schraubenloch abgewandten Rand stetig in die eigentliche Dichtungsplatte übergeht. Wie in Fig. 4 dargestellt, verläuft der dem Zentrum des Schraubenlochs 30 zugekehrte Randbereich 36' des Zentrierelements 36 parallel zur Ebene der eigentlichen Dichtungsplatte.

Die Bemessung des Zentrierelements 36 in Umfangsrichtung des Schraubenlochs 30 und die in Fig. 4 eingezeichnete Höhe H des Zentrierelements sind nun so auf die Blechstärke D und die Gewindesteigung und Gewindeform des Gewindeschafts 50 abgestimmt, daß die Breite und der Verlauf der dem Schraubenloch 30 zugewandten Kante 36" des Zentrierelements 36 verhindern, daß die Dichtungsplatte bzw. die Blechlage 38 in einen Gewindegang des Gewindeschafts 50 eingreifen kann, so wie dies aus Fig. 4 ohne weiteres ersichtlich wird, vielmehr stützt sich die Kante 36" stets auf einem Kamm des Gewindes und dadurch auf dem Außenumfang des Gewindeschafts 50 ab.

## Patentansprüche

1. Flachdichtung (10) mit einer Dichtungsplatte, welche wenigstens ein Schraubenloch (30) für den Durchtritt des Gewindeschafts (50) einer Schraube aufweist und im Bereich dieses Schraubenlochs von einer Blechlage (38) gebildet wird, deren Blechstärke ein Eingreifen eines an das Schraubenloch angrenzenden Randbereichs in einen Gewindegang des Gewindeschafts ermöglichen würde, **dadurch gekennzeichnet, daß** zur Zentrierung des Gewindeschafts (50) im Schraubenloch (30) die Blechlage (38) in ihrem an das Schraubenloch angrenzenden Randbereich mindestens ein von der Blechlage gebildetes und aus deren Ebene herausgebogenes, ein Eingreifen der Blechlage in einen Gewindegang verhinderndes Zentrierelement (36) aufweist, welches beim Anziehen der Schraube mindestens ungefähr in die Ebene der Blechlage zurückbiegbar ist.

2. Flachdichtung nach Anspruch 1, **dadurch gekennzeichnet, daß** sich das Zentrierelement (36) lediglich über den für die Schraubenzentrierung erforderlichen Umfangswinkel des Schraubenlochs erstreckt.

3. Flachdichtung nach Anspruch 1 oder 2, **dadurch gekennzeichnet, daß** das Zentrierelement (36) an seinen quer zum Schraubenlochrand verlaufenden Rändern mit der eigentlichen Blechlage verbunden ist und in diese übergeht.

4. Flachdichtung nach einem oder mehreren der Ansprüche 1 bis 3, **dadurch gekennzeichnet, daß** das Zentrierelement (36) an seinem vom Schraubenlochrand abgewandten Rand (36") mit der eigentlichen Blechlage verbunden ist und in diese übergeht.

5. Flachdichtung nach den Ansprüchen 3 und 4, **dadurch gekennzeichnet, daß** das Zentrierelement (36) die Gestalt einer aus der Blechlage herausgeprägten, dem Lochzentrum zu offenen Noppe oder Sicke hat.

6. Flachdichtung nach einem oder mehreren der vorstehenden Ansprüche, **dadurch gekennzeichnet, daß** der dem Schraubenlochzentrum zugekehrte Randbereich (36') des Zentrierelements (36) ungefähr parallel zur eigentlichen Blechlage verläuft.

7. Flachdichtung nach einem oder mehreren der vorstehenden Ansprüche, **dadurch gekennzeichnet, daß** die Blechlage mehrere Zentrierelemente (32, 34, 36) aufweist.

8. Flachdichtung nach Anspruch 7, **dadurch gekennzeichnet, daß** die Zentrierelemente (32, 34) - in Umfangsrichtung des Schraubenlochs - im Abstand voneinander angeordnet sind.

9. Flachdichtung nach einem oder mehreren der Ansprüche 1 bis 8, **dadurch gekennzeichnet, daß** das Zentrierelement (36) - vom Schraubenlochzentrum aus auf die Kante der Blechlage gesehen - eine ungefähr kreisbogenförmige Kontur mit gleichfalls ungefähr kreisbogenförmigen Übergängen in die eigentliche Blechlage aufweist.

## Claims

1. Flat gasket (10) with a gasket plate having at least one screw hole (30) for passage of the threaded shaft (50) of a screw therethrough and being formed in the region of this screw hole by a sheet-metal layer (38) with a sheet-metal thickness allowing engagement of an edge region bordering on the screw hole in a thread of the threaded shaft, **characterized in that** for centering the threaded shaft (50) in the screw hole (30) the sheet-metal layer (38) has in its edge region bordering on the screw hole at least one centering element (36) formed by the sheet-metal layer and bent out of the plane of the sheet-metal layer so as to prevent engagement of the sheet-metal layer in a thread, the centering element being able to be bent back at least approximately into the plane of the sheet-metal layer when tightening the screw.

2. Flat gasket as defined in claim 1, **characterized in that** the centering element (36) extends over only the circumferential angle of the screw hole required for centering the screw.

3. Flat gasket as defined in claim 1 or 2, **characterized in that** the centering element (36) is connected to and merges into the actual sheet-metal layer at the margins of the centering element extending transversely to the edge of the screw hole.

4. Flat gasket as defined in any or several of claims 1 to 3, **characterized in that** the centering element (36) is connected to and merges into the actual sheet-metal layer at the margin (36") of the centering element facing away from the edge of the screw hole.

5. Flat gasket as defined in claims 3 and 4, **characterized in that** the centering element (36) has the shape of a burl or bead embossed out of the sheet-metal layer and open towards the centre of the hole.

6. Flat gasket as defined in any or several of the preceding claims, **characterized in that** the edge region (36') of the centering element (36) facing the centre of the screw hole extends approximately parallel to the actual sheet-metal layer.

7. Flat gasket as defined in any or several of the preceding claims, **characterized in that** the sheet-metal layer has several centering elements (32, 34, 36).

8. Flat gasket as defined in claim 7, **characterized in that** the centering elements (32, 34) - in circumferential direction of the screw hole - are arranged at a distance from one another.

9. Flat gasket as defined in any or several of claims 1 to 8, **characterized in that** the centering element (36) - seen from the centre of the screw hole towards the edge of the sheet-metal layer - has a contour in the shape of an approximate circular arc with areas merging into the actual sheet-metal layer likewise in the shape of an approximate circular arc.

## Revendications

1. Joint plat (10) comprenant une plaque d'étanchéité, qui présente au moins un trou de vis (30) pour le passage de la tige filetée (50) d'une vis et est constituée dans la zone de ce trou de vis par une couche de tôle (38), dont l'épaisseur permettrait un engagement d'une zone périphérique contiguë au trou de vis dans un pas de filetage de la tige filetée, **caractérisé en ce que**, pour le centrage de la tige filetée (50) dans le trou de vis (30), la couche de tôle (38) présente dans sa zone périphérique contiguë au trou de vis au moins un élément de centrage (36) formé par la couche de tôle et plié en sortant du plan de cette couche, empêchant un engagement de la couche de tôle dans un pas de filetage, lequel élément peut être courbé lors du serrage de la vis au moins approximativement dans le plan de la couche de tôle.

2. Joint plat selon la revendication 1, **caractérisé en ce que** l'élément de centrage (36) s'étend uniquement sur l'angle périphérique, nécessaire pour le centrage des vis, du trou de vis.

3. Joint plat selon la revendication 1 ou 2, **caractérisé en ce que** l'élément de centrage (36) est relié sur ses bords agencés transversalement au bord du trou de vis à la couche de tôle proprement dite et fait place à celle-ci.

4. Joint plat selon l'une quelconque ou plusieurs des revendications 1 à 3, **caractérisé en ce que** l'élément de centrage (36) est relié sur son bord (36") opposé au bord du trou de vis à la couche de tôle proprement dite et fait place à celle-ci.

5. Joint plat selon les revendications 3 et 4, **caractérisé en ce que** l'élément de centrage (36) a la forme d'une noppe ou d'une moulure estampée à partir de la couche de tôle et ouverte sur le centre du trou.

6. Joint plat selon l'une quelconque ou plusieurs des revendications précédentes, **caractérisé en ce que** la zone périphérique (36'), tournée vers le centre du trou de vis, de l'élément de centrage (36) est agencée à peu près parallèlement à la couche de tôle proprement dite.

7. Joint plat selon l'une quelconque ou plusieurs des revendications précédentes, **caractérisé en ce que** la couche de tôle présente plusieurs éléments de centrage (32, 34, 36).

8. Joint plat selon la revendication 7, **caractérisé en ce que** les éléments de centrage (32, 34) sont disposés espacés les uns des autres dans le sens périphérique du trou de vis.

9. Joint plat selon l'une quelconque ou plusieurs des revendications 1 à 8, **caractérisé en ce que** l'élément de centrage (36) présente, vu depuis le centre du trou de vis vers l'arête de la couche de tôle, un contour approximativement en forme d'arc de cercle avec des transitions également à peu près en forme d'arc de cercle avec la couche de tôle proprement dite.
